# EUROPEAN PATENT APPLICATION

(11) **EP 4 611 438 A1**
(43) Date of publication of application: **03.09.2025**
(21) Application number: 23887485.3
(22) Date of filing: 29.06.2023
(51) Int. Cl.: H04W 52/02, H04W 76/15

(54) **MULTI-LINK COMMUNICATION METHOD AND COMMUNICATION APPARATUS**

(30) Priority: 09.11.2022 CN 202211398107
(71) Applicant: Huawei Technologies Co., Ltd., Shenzhen, Guangdong 518129 (CN)
(72) Inventor: HUANG, Lei, Shenzhen, Guangdong 518129 (CN); GAN, Ming, Shenzhen, Guangdong 518129 (CN); LI, Yunbo, Shenzhen, Guangdong 518129 (CN); GUO, Yuchen, Shenzhen, Guangdong 518129 (CN); HUANG, Guogang, Shenzhen, Guangdong 518129 (CN); YANG, Xun, Shenzhen, Guangdong 518129 (CN); PAN, Ju Yan, Shenzhen, Guangdong 518129 (CN)
(74) Representative: Körber, Martin Hans
(86) International application number: PCT/CN2023/103583
(87) International publication number: WO 2024/098789

(57) **Abstract**

This application provides a multi-link communication method and a communication apparatus. The method can be applied to a multi-link communication scenario. The method includes: A station multi-link device wakes up, based on a radio frame sent by an access point multi-link device, at least one affiliated station of the station multi-link device. All affiliated stations of the station multi-link device are in a doze state before the radio frame is received. In this way, this application supports waking up the at least one affiliated station of the station multi-link device in the multi-link communication scenario.

## Description

This application claims priority to Chinese Patent Application No. 202211398107.7, filed with the China National Intellectual Property Administration on November 9, 2022 and entitled "MULTI-LINK COMMUNICATION METHOD AND COMMUNICATION APPARATUS", which is incorporated herein by reference in its entirety.

### TECHNICAL FIELD

This application relates to communication technologies, and more specifically, to a multi-link communication method and a communication apparatus.

### BACKGROUND

A wake-up radio (wake-up radio, WUR) non-access point station (non-access point station, non-AP STA) is a non-AP STA that is capable of receiving a WUR physical protocol data unit (physical protocol data unit, PPDU) and supporting a WUR operation and that has a non-high throughput (non-high throughput, non-HT), an HT, a very high throughput (very high throughput, VHT), or high efficiency (high efficiency, HE). A WUR AP is an AP that is capable of sending a WUR PPDU and supporting a WUR operation and that has a non-HT, an HT, a VHT, or HE.

Specifically, the WUR operation includes at least a duty cycle operation (duty cycle operation) and a wake-up operation (wake-up operation). The duty cycle operation is used to determine a time within which a WUR power management (power management) state of the WUR non-AP STA using a WUR mode needs to be a WUR awake state (awake state) after the WUR non-AP STA enters a doze state (doze state). When the WUR non-AP STA is in the WUR awake state, the WUR AP sends a wake-up frame to an associated WUR non-AP STA, to notify the WUR non-AP STA that the WUR AP intends to communicate with the WUR non-AP STA.

However, the foregoing WUR mechanism is applicable to only single-link communication, and cannot meet a requirement for multi-link communication (multi-link operation). Therefore, a WUR mechanism that can be applied to multi-link communication is urgently needed.

### SUMMARY

This application provides a multi-link communication method and a communication apparatus, to support waking up at least one affiliated station of a station multi-link device in a multi-link communication scenario.

According to a first aspect, a multi-link communication method is provided, including: A station multi-link device receives a radio frame from an access point multi-link device, where the radio frame is used to wake up at least one affiliated station of the station multi-link device. The station multi-link device wakes up the at least one affiliated station based on the radio frame, where all affiliated stations of the station multi-link device are in a doze state before the radio frame is received.

In this way, this application supports waking up the at least one affiliated station of the station multi-link device in a multi-link communication scenario.

In a possible implementation, when the access point multi-link device is to perform downlink data transmission, the radio frame is used to wake up the at least one affiliated station; or when a communication parameter of the at least one affiliated station is updated, the radio frame is used to wake up the at least one affiliated station.

Specifically, the at least one affiliated station of the station multi-link device may be woken up because the access point multi-link device intends to perform downlink data transmission with the at least one affiliated station of the station multi-link device. Therefore, the foregoing radio frame indicates the downlink data transmission between the access point multi-link device and the at least one affiliated station of the station multi-link device. Correspondingly, after receiving the radio frame, the station multi-link device determines, based on the radio frame, that the at least one affiliated station of the station multi-link device needs to be woken up, to implement the downlink data transmission with the access point multi-link device.

Specifically, the at least one affiliated station of the station multi-link device may be woken up because the communication parameter is updated. For example, the station multi-link device determines, based on communication parameter update information or a counter value (the counter value indicates communication parameter update information) included in the radio frame, whether an affiliated station whose communication parameter is updated exists. If the affiliated station whose communication parameter is updated exists, the corresponding affiliated station may be woken up. Correspondingly, after receiving the radio frame, the station multi-link device determines, based on the radio frame, that the at least one affiliated station of the station multi-link device needs to be woken up, so that the at least one affiliated station of the station multi-link device can receive the updated communication parameter after being woken up.

In a possible implementation, the radio frame includes a transmission parameter associated with the downlink data transmission.

In a possible implementation, the transmission parameter includes at least one of the following: a bandwidth, a number of spatial streams, and a modulation and coding scheme.

The transmission parameters are carried in the radio frame, so that the at least one affiliated station of the station multi-link device can better implement the downlink data transmission with an AP MLD#A after being woken up. For example, the number of spatial streams can help the station multi-link device determine a number of links to be powered on; the bandwidth can help the station multi-link device fine-tune an analog-to-digital converter (analog-to-digital converter, ADC), to avoid unnecessary oversampling; and the MCS can help the station multi-link device determine a required error vector magnitude (error vector magnitude, EVM).

In a possible implementation, the radio frame includes identification information of the at least one affiliated station, or the at least one affiliated station is predefined in a protocol.

The identification information is carried, so that the station multi-link device can determine, based on the identification information, an affiliated station that needs to be woken up.

In a possible implementation, the identification information includes: a traffic identifier. The traffic identifier indicates a link identifier; or a link identifier.

In a possible implementation, the radio frame includes a type field, and a first value of the type field indicates that the radio frame is a first-type radio frame.

In a possible implementation, the radio frame further includes an identification field, the identification field indicates an identifier of the station multi-link device, an identifier of the access point multi-link device, or a group identifier of a station multi-link device group, and the station multi-link device group includes the station multi-link device.

In a possible implementation, the radio frame further includes a frame body field, the frame body field includes the identifier of the station multi-link device, the frame body field includes an identification bitmap, and the identification bitmap indicates the identification information.

In a possible implementation, the radio frame further includes a frame body field, the identification field includes the group identifier of the station multi-link device group, the frame body field includes the identifier of the station multi-link device and an identification bitmap, and the identification bitmap indicates the identification information.

In a possible implementation, the identification bitmap includes a traffic identifier bitmap, and the traffic identifier bitmap indicates the traffic identifier; or the identification bitmap includes a link identifier bitmap, and the link identifier bitmap indicates the link identifier.

In a possible implementation, the radio frame further includes a frame body field, the identification field includes the identifier of the access point multi-link device, and the frame body field includes communication parameter update information.

In a possible implementation, the communication parameter update information includes a counter bitmap and a counter list.

In a possible implementation, the frame body field further includes the transmission parameter.

In a possible implementation, the identifier of the access point multi-link device includes 12 least significant bits of a compressed media access control address of the access point multi-link device.

In a possible implementation, the station multi-link device includes at least two affiliated stations.

According to a second aspect, a multi-link communication method is provided, including: An access point multi-link device sends a radio frame to at least one station multi-link device, where the radio frame is used to wake up at least one affiliated station of each of the at least one station multi-link device. The access point multi-link device performs downlink data transmission or a communication parameter update with the at least one woken-up affiliated station, where all affiliated stations of each station multi-link device are in a doze state before the radio frame is received.

In a possible implementation, when the access point multi-link device is to perform the downlink data transmission, the radio frame is used to wake up the at least one affiliated station; or when a communication parameter of the at least one affiliated station is updated, the radio frame is used to wake up the at least one affiliated station.

In a possible implementation, the radio frame includes a transmission parameter associated with the downlink data transmission.

In a possible implementation, the transmission parameter includes at least one of the following: a bandwidth, a number of spatial streams, and a modulation and coding scheme.

In a possible implementation, the radio frame includes identification information of the at least one affiliated station, or the at least one affiliated station is predefined in a protocol.

In a possible implementation, the identification information includes: a traffic identifier. The traffic identifier indicates a link identifier; or a link identifier.

In a possible implementation, the radio frame includes a type field, and a first value of the type field indicates that the radio frame is a first-type radio frame.

In a possible implementation, the radio frame further includes an identification field, and the identification field indicates an identifier of the station multi-link device.

In a possible implementation, the radio frame further includes an identification field, and the identification field indicates a group identifier of the station multi-link device group.

In a possible implementation, the radio frame further includes an identification field, and the identification field indicates an identifier of the access point multi-link device.

In a possible implementation, the radio frame further includes a frame body field, the identification field includes the identifier of the one station multi-link device, the frame body field includes an identification bitmap, and the identification bitmap indicates the identification information.

In a possible implementation, the radio frame further includes a frame body field, the identification field includes the group identifier of the station multi-link device group, the frame body field includes identifiers of the at least two station multi-link devices and at least two identification bitmaps, and the identification bitmap indicates the identification information. The identifiers of the at least two station multi-link devices are in a one-to-one correspondence with the at least two identification bitmaps.

In a possible implementation, the identification bitmap includes a traffic identifier bitmap, and the traffic identifier bitmap indicates the traffic identifier; or the identification bitmap includes a link identifier bitmap, and the link identifier bitmap indicates the link identifier.

In a possible implementation, the radio frame further includes a frame body field, the identification field includes the identifier of the access point multi-link device, and the frame body field includes communication parameter update information.

In a possible implementation, the communication parameter update information includes a counter bitmap and a counter list.

In a possible implementation, the frame body field further includes the transmission parameter.

In a possible implementation, the identifier of the access point multi-link device includes 12 least significant bits of a compressed media access control address of the access point multi-link device.

In a possible implementation, the access point multi-link device includes at least two affiliated access points.

According to a third aspect, a communication apparatus is provided, including: a transceiver unit, configured to receive a radio frame from an access point multi-link device, where the radio frame is used to wake up at least one affiliated device of the communication apparatus; and a processing unit, configured to wake up the at least one affiliated device based on the radio frame. All affiliated devices of the communication apparatus are in a doze state before the radio frame is received.

In a possible implementation, when the access point multi-link device is to perform downlink data transmission, the radio frame is used to wake up the at least one affiliated device; or when a communication parameter of the at least one affiliated device is updated, the radio frame is used to wake up the at least one affiliated device.

In a possible implementation, the radio frame includes a transmission parameter associated with the downlink data transmission.

In a possible implementation, the transmission parameter includes at least one of the following: a bandwidth, a number of spatial streams, and a modulation and coding scheme.

In a possible implementation, the radio frame includes identification information of the at least one affiliated device, or the at least one affiliated device is predefined in a protocol.

In a possible implementation, the identification information includes: a traffic identifier. The traffic identifier indicates a link identifier; or a link identifier.

In a possible implementation, the radio frame includes a type field, and a first value of the type field indicates that the radio frame is a first-type radio frame.

In a possible implementation, the radio frame further includes an identification field, the identification field indicates an identifier of the communication apparatus, an identifier of the access point multi-link device, or a group identifier of a multi-link device group, and the multi-link device group includes the communication apparatus.

In a possible implementation, the radio frame further includes a frame body field, the identification field includes the identifier of the communication apparatus, the frame body field includes an identification bitmap, and the identification bitmap indicates the identification information.

In a possible implementation, the radio frame further includes a frame body field, the identification field includes the group identifier of the multi-link device group, the frame body field includes the identifier of the communication apparatus and an identification bitmap, and the identification bitmap indicates the identification information.

In a possible implementation, the identification bitmap includes a traffic identifier bitmap, and the traffic identifier bitmap indicates the traffic identifier; or the identification bitmap includes a link identifier bitmap, and the link identifier bitmap indicates the link identifier.

In a possible implementation, the radio frame further includes a frame body field, the identification field includes the identifier of the access point multi-link device, and the frame body field includes communication parameter update information.

In a possible implementation, the communication parameter update information includes a counter bitmap and a counter list.

In a possible implementation, the frame body field further includes the transmission parameter.

In a possible implementation, the identifier of the access point multi-link device includes 12 least significant bits of a compressed media access control address of the access point multi-link device.

In a possible implementation, the communication apparatus includes at least two affiliated devices.

According to a fourth aspect, a communication apparatus is provided, including: a transceiver unit, configured to send a radio frame to at least one station multi-link device, where the radio frame is used to wake up at least one affiliated station of each of the at least one station multi-link device; and a processing unit, configured to perform downlink data transmission or a communication parameter update with the at least one woken-up affiliated station. All affiliated stations of each station multi-link device are in a doze state before the radio frame is received.

In a possible implementation, when the communication apparatus is to perform the downlink data transmission, the radio frame is used to wake up the at least one affiliated station; or when a communication parameter of the at least one affiliated station is updated, the radio frame is used to wake up the at least one affiliated station.

In a possible implementation, the radio frame includes a transmission parameter associated with the downlink data transmission.

In a possible implementation, the transmission parameter includes at least one of the following: a bandwidth, a number of spatial streams, and a modulation and coding scheme.

In a possible implementation, the radio frame includes identification information of the at least one affiliated station, or the at least one affiliated station is predefined in a protocol.

In a possible implementation, the identification information includes: a traffic identifier. The traffic identifier indicates a link identifier; or a link identifier.

In a possible implementation, the radio frame includes a type field, and a first value of the type field indicates that the radio frame is a first-type radio frame.

In a possible implementation, the radio frame further includes an identification field, and the identification field indicates an identifier of the station multi-link device.

In a possible implementation, the radio frame further includes an identification field, the identification field indicates a group identifier of a station multi-link device group, and the station multi-link device group includes at least two station multi-link devices.

In a possible implementation, the radio frame further includes an identification field, and the identification field indicates an identifier of the communication apparatus.

In a possible implementation, the radio frame further includes a frame body field, the identification field includes the identifier of the one station multi-link device, the frame body field includes an identification bitmap, and the identification bitmap indicates the identification information.

In a possible implementation, the radio frame further includes a frame body field, the identification field includes the group identifier of the station multi-link device group, the frame body field includes identifiers of the at least two station multi-link devices and at least two identification bitmaps, and the identification bitmap indicates the identification information. The identifiers of the at least two station multi-link devices are in a one-to-one correspondence with the at least two identification bitmaps.

In a possible implementation, the identification bitmap includes a traffic identifier bitmap, and the traffic identifier bitmap indicates the traffic identifier; or the identification bitmap includes a link identifier bitmap, and the link identifier bitmap indicates the link identifier.

In a possible implementation, the radio frame further includes a frame body field, the identification field includes the identifier of the communication apparatus, and the frame body field includes communication parameter update information.

In a possible implementation, the communication parameter update information includes a counter bitmap and a counter list.

In a possible implementation, the frame body field further includes the transmission parameter.

In a possible implementation, the identifier of the communication apparatus includes 12 least significant bits of a compressed media access control address of the communication apparatus.

In a possible implementation, the communication apparatus includes at least two affiliated devices.

According to a fifth aspect, a communication apparatus is provided, including a processor. The processor is configured to: enable, by executing a computer program or instructions or by using a logic circuit, the communication apparatus to perform the method according to any one of the first aspect or the possible implementations of the first aspect, or the communication apparatus to perform the method according to any one of the second aspect or the possible implementations of the second aspect.

In a possible implementation, the communication apparatus further includes a memory. The memory is configured to store the computer program or the instructions.

In a possible implementation, the communication apparatus further includes a communication interface. The communication interface is configured to: input and/or output a signal.

According to a sixth aspect, a communication apparatus is provided, including a logic circuit and an input/output interface. The input/output interface is configured to: input and/or output a signal. The logic circuit is configured to: perform the method according to any one of the first aspect or the possible implementations of the first aspect; or perform the method according to any one of the second aspect or the possible implementations of the second aspect.

According to a seventh aspect, a computer-readable storage medium is provided, including a computer program or instructions. When the computer program or the instructions are run on a computer, the method according to any one of the first aspect or the possible implementations of the first aspect is performed, or the method according to any one of the second aspect or the possible implementations of the second aspect is performed.

According to an eighth aspect, a computer program product is provided, including instructions. When the instructions are run on a computer, the method according to any one of the first aspect or the possible implementations of the first aspect is performed, or the method according to any one of the second aspect or the possible implementations of the second aspect is performed.

According to a ninth aspect, a computer program is provided. When the computer program is run on a computer, the method according to any one of the first aspect or the possible implementations of the first aspect is performed, or the method according to any one of the second aspect or the possible implementations of the second aspect is performed.

### BRIEF DESCRIPTION OF DRAWINGS

FIG. 1 is a diagram of an application scenario to which embodiments of this application are applicable;
FIG. 2 is a diagram of an association relationship between multi-link devices;
FIG. 3 is a diagram of an enhanced WUR duty cycle operation according to an embodiment of this application;
FIG. 4 is a diagram of state switching of a WUR power state of a STA MLD according to an embodiment of this application;
FIG. 5 is a diagram of a format of an enhanced WUR operation element according to an embodiment of this application;
FIG. 6 is a diagram of a format of an enhanced WUR capability element according to an embodiment of this application;
FIG. 7 is a schematic flowchart of a multi-link communication method 700 according to an embodiment of this application;
FIG. 8 is a diagram of a format 800 of a radio frame S according to an embodiment of this application;
FIG. 9 is a diagram of a format 900 of a radio frame S according to an embodiment of this application;
FIG. 10 is a diagram of a format 1000 of a radio frame S according to an embodiment of this application;
FIG. 11 is a diagram of a format 1100 of a radio frame S according to an embodiment of this application;
FIG. 12 is a diagram of a format 1200 of a radio frame S according to an embodiment of this application;
FIG. 13 is a diagram of a format 1300 of a radio frame S according to an embodiment of this application;
FIG. 14 is a diagram of a format 1400 of a radio frame S according to an embodiment of this application;
FIG. 15 is a diagram of a format 1500 of a radio frame S according to an embodiment of this application;
FIG. 16 is a diagram of a format 1600 of a radio frame S according to an embodiment of this application;
FIG. 17 is a diagram of a format 1700 of a radio frame S according to an embodiment of this application;
FIG. 18 is a block diagram of a communication apparatus 1800 according to an embodiment of this application;
FIG. 19 is a block diagram of a communication apparatus 1900 according to an embodiment of this application;
FIG. 20 is a block diagram of a communication apparatus 2000 according to an embodiment of this application;
FIG. 21 is a block diagram of a communication apparatus 2100 according to an embodiment of this application; and
FIG. 22 is a block diagram of a communication apparatus 2200 according to an embodiment of this application.

### DESCRIPTION OF EMBODIMENTS

The following describes technical solutions of this application with reference to accompanying drawings.

The technical solutions provided in this application are applicable to a wireless local area network (wireless local area network, WLAN) scenario. For example, the technical solutions in this application are applicable to an IEEE 802.11 system standard, such as the 802.11a/b/g standard, the 802.11n standard, the 802.11ac standard, the 802.11ax standard, or a next-generation standard thereof, such as the 802.11be standard or a further next-generation standard.

Although this application is mainly described by using an example in which a WLAN network is deployed, especially a network to which the IEEE 802.11 system standard is applied, a person skilled in the art easily understands that various aspects in this application may be extended to other networks that use various standards or protocols, for example, Bluetooth (Bluetooth), a high performance radio local area network (high performance radio local area network, HIPERLAN), a wide area network (wide area network, WAN), a personal area network (personal area network, PAN), and other networks that are known or developed in the future. Therefore, regardless of a used coverage area and wireless access protocol, the various aspects provided in this application are applicable to any suitable wireless network.

The technical solutions in this application may be further applied to various communication systems, for example, a global system for mobile communication (global system for mobile communication, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, a future 6th generation (6th generation, 6G) system, and a wireless local area network system such as an internet of things (internet of things, IoT) network or vehicle-to-everything (vehicle-to-X, V2X).

The foregoing communication system applicable to this application is only an example for description, and the communication system applicable to this application is not limited thereto. This is uniformly described herein, and details are not described below again.

A terminal in this application may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal may alternatively be a cellular phone, a cordless phone, a session initiation protocol (session Initiation Protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a 5G network, a terminal in a future 6G network, a terminal in a public land mobile network (public land mobile network, PLMN), or the like. This is not limited in this application.

A network device in this application may be a device configured to communicate with the terminal. The network device may be a base transceiver station (base transceiver station, BTS) in a global system for mobile communications (global system of mobile communications, GSM) or a code division multiple access (code division multiple access, CDMA) system; may be a NodeB (NodeB, NB) in a wideband code division multiple access (wideband code division multiple access, WCDMA) system; may be an evolved NodeB (evolved nodeB, eNB or eNodeB) in an LTE system; or may be a radio controller in a cloud radio access network (cloud radio access network, CRAN) scenario. Alternatively, the network device may be a relay station, an access point, a vehicle-mounted device, a wearable device, a network device in a 5G network, a network device in a future 6G network, a network device in a PLMN network, or the like. This is not limited in this application.

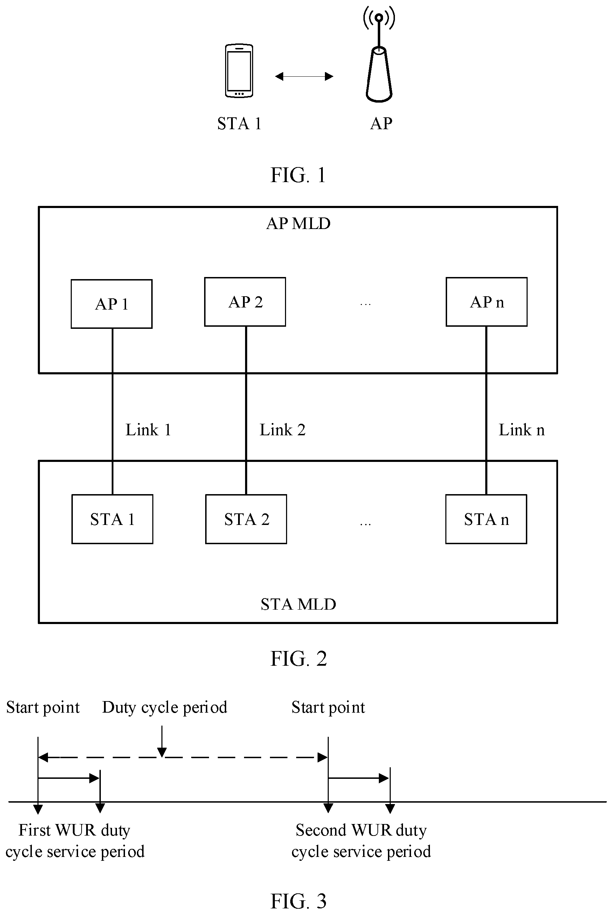

FIG. 1 is a diagram of an application scenario to which embodiments of this application are applicable. In FIG. 1, an access point may be a communication server, a router, or a switch, or may be any one of the foregoing network devices. A station (station, STA) may be a mobile phone or a computer, or may be any one of the foregoing terminals. This is not limited in embodiments of this application.

It should be understood that technical solutions of this application are not only applicable to communication between an access point and one or more stations, but also applicable to mutual communication between access points, and also applicable to mutual communication between stations. For ease of description, in this application, only an example in which the access point communicates with the one or more stations is used for description. However, this description manner exposes no limitation on an actual application scope of the technical solutions of this application. This is uniformly described herein, and details are not described below again.

The access point may be an access point used by a terminal (for example, a mobile phone) to access a wired (or wireless) network, and is mainly deployed at home, in a building, and in a campus. A typical coverage radius is tens of meters or 100-odd meters. Certainly, the access point may alternatively be deployed outdoors. The access point is equivalent to a bridge that connects a wired network and a wireless network. A main function of the access point is to connect various wireless network clients together and then connect the wireless network to the Ethernet. Specifically, the access point may be a terminal (for example, a mobile phone) or a network device (for example, a router) with a Wi-Fi chip. The access point may be a device supporting the 802.11be standard. Alternatively, the access point may be a device that supports a plurality of WLAN standards of the 802.11 family, such as 802.11ax, 802.11ac, 802.11n, 802.11g, 802.11b, 802.11a, and a next generation of 802.11be. The access point in this application may be an HE AP or an EHT AP, or may be an access point applicable to a future-generation Wi-Fi standard.

The STA may be a wireless communication chip, a wireless sensor, a wireless communication terminal, or the like, or may be referred to as a user. For example, the STA may be a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, a computer supporting a Wi-Fi communication function, and the like. Optionally, the STA may support the 802.11be standard. Alternatively, the STA may support WLAN standards of the 802.11 family, such as 802.11ax, 802.11ac, 802.11n, 802.11g, 802.11b, 802.11a, and the next generation of 802.11be.

For example, the AP and the STA may be devices used in vehicle-to-everything, internet of things nodes, sensors, or the like in the internet of things (internet of things, IoT), smart cameras, smart remote controls, smart water or electricity meters, or the like in a smart home, sensors in a smart city, and the like.

A wireless communication system provided in this application may be the WLAN or a cellular network. The method may be implemented by a communication device in the wireless communication system or a chip or a processor in the communication device. The communication device may be a wireless communication device that supports parallel transmission on a plurality of links, for example, a multi-link device (multi-link device, MLD). Compared with a device that supports only single-link transmission, the multi-link device has higher transmission efficiency and a higher throughput. A multi-link device includes one or more affiliated stations (affiliated STA). One affiliated station is a logical station that can work on one link. The affiliated station may be an AP or a non-AP STA (STA for short). For ease of description, in embodiments of this application, an MLD whose affiliated station is an AP may be referred to as a multi-link AP, a multi-link AP device, or an AP multi-link device (AP MLD). A multi-link device whose affiliated station is a non-AP STA may be referred to as a multi-link STA, a multi-link STA device, or a STA multi-link device (non-AP MLD).

FIG. 2 is a diagram of an association relationship between multi-link devices. An AP MLD shown in FIG. 2 may include a plurality of APs, and a STA MLD may include a plurality of STAs. If the AP MLD needs to communicate with the STA MLD, each AP in the AP MLD needs to be associated with a corresponding STA in the STA MLD. As shown in FIG. 2, an AP 1 in the AP MLD is associated with a STA 1 in the STAMLD, and works on a link 1 (the link 1 is associated with the AP 1 and the STA 1). An AP 2 in the AP MLD is associated with a STA2 in the STAMLD, and works on a link 2 (the link 2 is associated with the AP 2 and the STA 2). An AP n in the AP MLD is associated with a STA n in the STA MLD, and works on a link n (the link n is associated with the AP n and the STA n). In this way, each AP in the AP MLD may establish, on a respective link, a connection to a corresponding STA in the STA MLD, to perform multi-link communication between the two MLDs.

Currently, as described above, a WUR mechanism formulated in an existing standard is applicable only to a single-link communication scenario, and cannot be applicable to a multi-link communication scenario. In view of the technical problem, this application provides a multi-link communication method and a multi-link device, to support waking up at least one affiliated station of the station multi-link device in the multi-link communication scenario.

The following briefly describes some technical terms related to the technical solutions disclosed in this application.

First, an enhanced WUR duty cycle operation.

Specifically, the enhanced WUR duty cycle operation is determined by using the following parameters: a start point (start point), a WUR duty cycle service period (WUR duty cycle service period), and a duty cycle period (duty cycle period). The start point indicates a start time of a WUR duty cycle service period. For any WUR duty cycle service period, a start time of a next WUR duty cycle service period is equal to a start time of a previous WUR duty cycle service period plus a duty cycle period. For details, refer to FIG. 3.

FIG. 3 is a diagram of an enhanced WUR duty cycle operation according to an embodiment of this application. As shown in FIG. 3, a start time of a second WUR duty cycle service period is equal to a start time of a first WUR duty cycle service period plus a duty cycle period. Each WUR duty cycle service period falls within a corresponding duty cycle period.

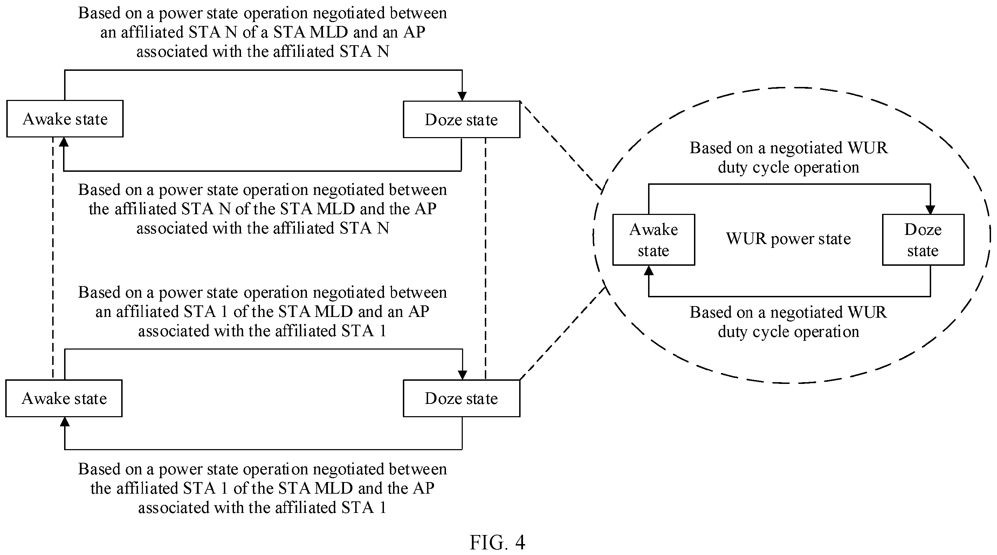

In this embodiment of this application, the enhanced WUR duty cycle operation can be used to determine a time within which a WUR power state (power state) of a STA MLD using a WUR mode needs to be a WUR awake state after all affiliated stations of a STA MLD (or a non-AP STA MLD) enter a doze state. For specific state switching of the WUR power state of the STA MLD, refer to FIG. 4.

FIG. 4 is a diagram of state switching of a WUR power state of a STA MLD according to an embodiment of this application. As shown in FIG. 4, if the STA MLD is in a WUR mode, all affiliated stations of the STA MLD are in a WUR doze state, and the WUR power state of the STA MLD needs to be a WUR awake state in a WUR duty cycle service period.

Second, an enhanced WUR operation element (enhanced WUR operation element).

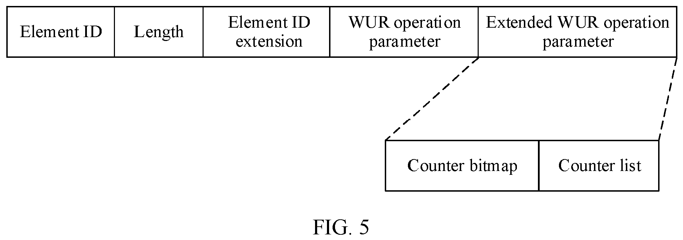

Specifically, the enhanced WUR operation element includes a parameter set required to support an enhanced WUR operation, and the parameter set is located inside a beacon frame (beacon frame), a probe response frame (probe response frame), an association response frame (association response frame), a reassociation response frame (reassociation response frame), and the like. A format of the enhanced WUR operation element is shown in FIG. 5.

FIG. 5 is a diagram of a format of an enhanced WUR operation element according to an embodiment of this application. As shown in FIG. 5, the enhanced WUR operation element includes fields such as an element ID (one byte), a length (one byte), an element ID extension (one byte), a WUR operation parameter (10 bytes), and an extended WUR operation parameter (a variable quantity of bytes). Both the element ID and the element ID extension are used to identify the WUR operation element. In addition, a counter (a subfield) in the WUR operation parameter (a field) includes a counter (a subfield) currently corresponding to a sending link, and the counter (the subfield) is located in a radio frame sent by an AP working on the sending link or in a radio frame sent by an AP affiliated with a same AP MLD as an AP working on the sending link.

In FIG. 5, the extended WUR operation parameter includes a counter bitmap (16 bits) (a subfield) and a counter list (4n bits) (a subfield). Optionally, the extended WUR operation parameter may further include a reserved bit. The counter bitmap (the subfield) indicates one or more links other than a sending link on which a corresponding counter (subfield) in the counter list (the subfield) exists. For example, a value at a bit location k in the counter bitmap (the subfield) is 1, indicating that a corresponding counter (the subfield) exists on a link k. A value at a bit location k in the counter bitmap (the subfield) is 0, indicating that no corresponding counter (the subfield) exists on a link k. This application supports setting a bit corresponding to the sending link in the counter bitmap (the subfield) to 0. The counter list (the subfield) includes one or more counters (subfields). Each counter (the subfield) includes a current counter (a subfield), and the current counter is located in a radio frame sent by an AP working on the sending link or in a radio frame sent by an AP affiliated with a same AP MLD as an AP working on a specific link. A corresponding bit that is set to 1 exists in the counter bitmap (the subfield) on the specific link. The one or more counters (the subfields) are arranged in ascending order of link IDs.

For example, a STA MLD has three links (namely, a link 1, a link 2, and a link 3), the link 2 is a sending link, and the counter bitmap (the subfield) indicates that a counter (a subfield) exists in the counter list (subfield) on the link 1 and the link 3. In this case, a first counter (a subfield) in the counter list (the subfield) corresponds to the link 1, and a second counter (a subfield) corresponds to the link 3. The counter (the subfield) in the WUR operation parameter (the field) corresponds to the link 2. For descriptions of other fields in the enhanced WUR operation element, refer to a current technology. Details are not described in this application. This application mainly focuses on a design of the extended WUR operation parameter.

Third, an enhanced WUR capability element (enhanced WUR capability element)

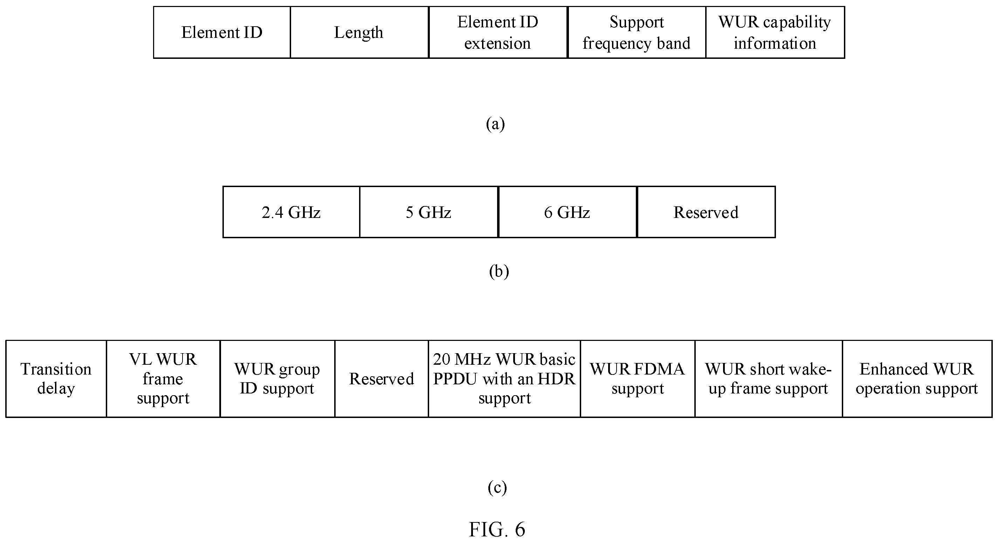

Specifically, the enhanced WUR capability element includes many fields indicating a WUR capability of a STA MLD, and the fields are located inside a beacon frame, a probe request frame, a probe response frame, an association request frame, an association response frame, a reassociation request frame, a reassociation response frame, and the like. A format of the enhanced WUR capability element is shown in FIG. 6.

FIG. 6 is a diagram of a format of an enhanced WUR capability element according to an embodiment of this application. As shown in (a) in FIG. 6, the enhanced WUR capability element includes an element ID (one byte) (a field), a length (one byte) (a field), an element ID extension (one byte) (a field), a support frequency band (one byte) (a field), and WUR capability information (two bytes) (a field). An example format of the support frequency band (the field) is shown in (b) in FIG. 6, and an example format of the WUR capability information (the field) is shown in (c) in FIG. 6. The WUR capability information (the field) includes: a transition delay (a subfield), a variable-length (variable-length, VL) WUR frame support (a subfield), a WUR group ID support (a subfield), reserved (a subfield), a 20 MHz WUR basic physical protocol data unit (physical protocol data unit, PPDU) (a subfield) with a high data rate (high data rate, HDR) support, a WUR frequency division multiple access (frequency division multiple access, FDMA) support (a subfield), a WUR short wake-up frame support (a subfield), and an enhanced WUR operation support (a subfield). In addition, the transition delay (the subfield), the VL WUR frame support (the subfield), the WUR group ID support (the subfield), reserved (the subfield), the 20 MHz WUR basic PPDU (the subfield) with the HDR support, the WUR FDMA support (the subfield), and the WUR short wake-up frame support (the subfield) in the WUR capability information (field) may use an existing design format. For specific content, refer to the current technology. Details are not described herein again in this application.

This application supports setting 2.4 GHz (a subfield) in the support frequency band (the field) to 1, to indicate that a WUR operation supports the 2.4 GHz frequency band. Otherwise, 2.4 GHz (a subfield) in the support frequency band (field) is set to 0. 5 GHz (a subfield) in the support frequency band (the field) is set to 1, to indicate that the WUR operation supports the 5 GHz frequency band. Otherwise, 5 GHz (a subfield) in the support frequency band (field) is set to 0. 6 GHz (a subfield) in the support frequency band (the field) is set to 1, to indicate that the WUR operation supports the 6 GHz frequency band. Otherwise, 6 GHz (a subfield) in the support frequency band (field) is set to 0. The enhanced WUR operation support (the subfield) in the WUR capability information (the field) is set to 1, to indicate that the enhanced WUR operation is supported. Otherwise, the enhanced WUR operation support (the subfield) in the WUR capability information (the field) is set to 0.

For descriptions of other fields in the enhanced WUR capability element (the field), refer to the current technology. Details are not described again in this application. This application mainly focuses on a design of the support frequency band (the field) and a design of the enhanced WUR operation support (the subfield) in WUR capability information (the field).

The following specifically describes the multi-link communication method and the multi-link device in embodiments of this application.

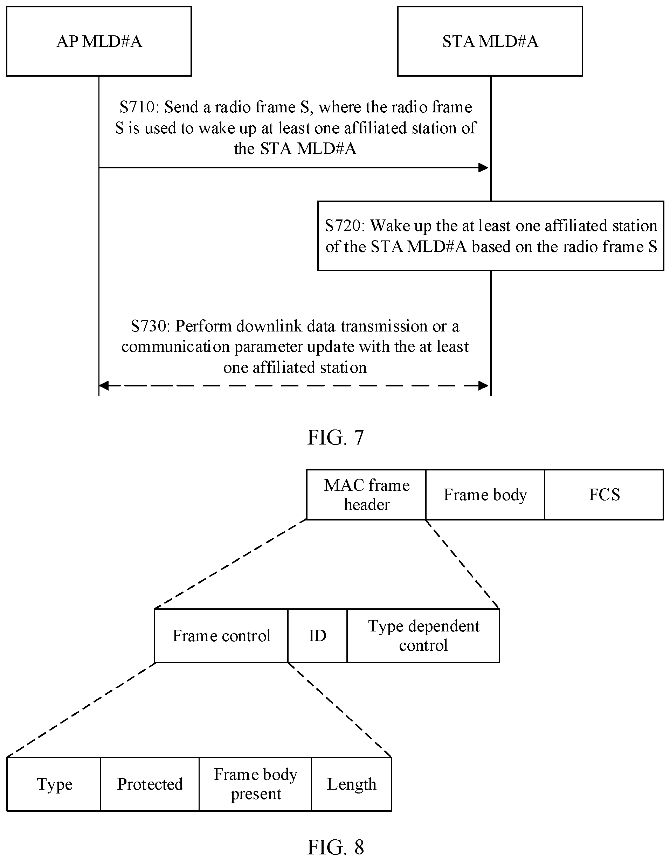

FIG. 7 is a schematic interaction flowchart of a multi-link communication method 700 according to an embodiment of this application. The method procedure in FIG. 7 may be performed by a station multi-link device and an access point multi-link device, or may be performed by a module and/or a device (such as a chip or an integrated circuit) that has a corresponding function and that is installed in the station multi-link device and the access point multi-link device. This is not limited in this application. As shown in FIG. 7, the method 700 includes the following steps.

S710: An AP MLD#A sends a radio frame S to a STA MLD#A, where the radio frame S is used to wake up at least one affiliated station of the STA MLD#A.

Correspondingly, the STA MLD#A receives the radio frame S from the AP MLD#A.

In S710, the AP MLD#A may send the radio frame S to one STA MLD, may send the radio frame S to a plurality of STA MLDs, or may send the radio frame S to different STA MLDs in a plurality of STA MLD groups. This is not limited in this application. Therefore, the STA MLD#A is a general concept, and may refer to one STA MLD, or may refer to a plurality of STA MLDs (the plurality of STA MLDs may belong to a same STA MLD group, or may belong to a plurality of STA MLD groups, and this is not limited in this application).

In a possible implementation, that the AP MLD#A wakes up at least one affiliated station of the STA MLD#A by using the radio frame S may be further understood as an example: The AP MLD#A wakes up at least one link between the AP MLD#A and the STA MLD#A by using the radio frame S. Each link is associated with one STA of the STAMLD#A and one corresponding AP of the AP MLD#A.

It should be understood that the AP MLD#A may wake up the at least one affiliated station of the STA MLD#A by using the radio frame S based on the following several example cases.

In a possible implementation, when the AP MLD#A is to perform downlink data transmission, the AP MLD#A wakes up the at least one affiliated station of the STA MLD#A by using the radio frame S.

Specifically, that the AP MLD#A wakes up the at least one affiliated station of the STA MLD#A may be for a purpose that the AP MLD#A intends to perform the downlink data transmission with the at least one affiliated station of the STA MLD#A. Therefore, the radio frame S indicates the downlink data transmission between the AP MLD#A and the at least one affiliated station of the STA MLD#A. Correspondingly, after receiving the radio frame S, the STA MLD#A may determine, based on the radio frame S, that the at least one affiliated station of the STA MLD#A needs to be woken up, to implement the downlink data transmission with the AP MLD#A.

In other words, the at least one affiliated station of the STA MLD#A may be woken up because the AP MLD#A intends to perform the downlink data transmission with the at least one affiliated station of the STA MLD#A. Therefore, the radio frame S indicates the downlink data transmission between the AP MLD#A and the at least one affiliated station of the STA MLD#A. Correspondingly, after receiving the radio frame S, the STA MLD#A determines, based on the radio frame S, that the at least one affiliated station of the STA MLD#A needs to be woken up, to implement the downlink data transmission with the AP MLD#A.

In a possible implementation, when a communication parameter of the at least one affiliated station of the STA MLD#A is updated, the at least one affiliated station of the STA MLD#A may be woken up by using the radio frame S. In this way, the communication parameter of the at least one affiliated station of the STA MLD#A can be updated, to better serve communication between the AP MLD#A and the STA MLD#A.

In an example, when the AP MLD#A determines that a communication parameter is updated on at least one link between the AP MLD#A and the STA MLD#A (in this example, this application supports the AP MLD#A in determining an affiliated station that is of the STA MLD#A and whose communication parameter is updated), the AP MLD#A may wake up the at least one affiliated station of the STA MLD#A by using the radio frame S. Therefore, after being woken up, the at least one affiliated station of the STA MLD#A can receive an updated communication parameter. In another example, the STA MLD#A may determine, based on the radio frame S sent by the AP MLD#A, whether an affiliated station whose communication parameter is updated exists. If the affiliated station exists, the at least one affiliated station of the STA MLD#A may be woken up (in this example, this application supports the STA MLD#A in determining the affiliated station that is of the STA MLD#A and whose communication parameter is updated).

In other words, the at least one affiliated station of the STA MLD#A may be woken up due to the communication parameter update. For example, the STA MLD#A determines, based on communication parameter update information or a counter value (the counter value indicates communication parameter update information) included in the radio frame S, whether an affiliated station whose communication parameter is updated exists. If the affiliated station whose communication parameter is updated exists, the corresponding affiliated station may be woken up. Correspondingly, after receiving the radio frame S, the STA MLD#A determines, based on the radio frame S, that the at least one affiliated station of the STA MLD#A needs to be woken up, so that the at least one affiliated station of the STA MLD#A can receive an updated communication parameter after being woken up.

The communication parameter update may include a basic service set (basic service set, BSS) parameter key update. For example, the BSS parameter key update may include a channel switching notification element included in a beacon frame, an extended channel switching notification element, and/or a changed enhanced distributed channel access (enhanced distributed channel access, EDCA) parameter element, and the like.

In other words, the at least one affiliated station of the STA MLD#A may be woken up due to the communication parameter update. Therefore, the radio frame S indicates that a communication parameter of the at least one affiliated station of the STA MLD#A is updated (for example, the BSS parameter key update). Correspondingly, after receiving the radio frame S, the STA MLD#A determines, based on the radio frame S, that the at least one affiliated station of the STA MLD#A needs to be woken up, to obtain an updated communication parameter.

In a possible implementation, the radio frame S carries indication information 1, and the indication information 1 indicates that the communication parameter of the at least one affiliated station of the STA MLD#A is updated.

In a possible implementation, the radio frame S includes communication parameter update information. Correspondingly, the STA MLD#A determines, based on the communication parameter update information in the radio frame S, whether an affiliated station whose communication parameter is updated exists. If the affiliated station whose communication parameter is updated exists, the affiliated station is woken up.

In conclusion, the at least one affiliated station of the STA MLD#A may be woken up due to the downlink data transmission, or may be woken up due to the communication parameter update. This is not limited in this application.

In a possible implementation, the foregoing "wake-up" may be power state switching of the affiliated station of the STA MLD#A. For example, before the radio frame S is received, each affiliated station of the STA MLD#A already enters a doze state. After receiving the radio frame S, the STA MLD#A switches, from the doze state to an awake state, a power state of the affiliated station that needs to be woken up, to wake up the affiliated station of the STA MLD#A.

In a possible implementation, the radio frame S may further include a transmission parameter associated with the downlink data transmission. For example, the transmission parameter includes a bandwidth (bandwidth), a number of spatial streams (number of spatial streams), a modulation and coding scheme (modulation and coding scheme), and the like. The transmission parameters are carried in the radio frame S, so that the at least one affiliated station of the STA MLD#A can better implement the downlink data transmission with the AP MLD#A after being woken up. For example, the number of spatial streams can help the STA MLD#A determine a number of links to be powered on; the bandwidth can help the STA MLD#A fine-tune an analog-to-digital converter (analog-to-digital converter, ADC), to avoid unnecessary oversampling; and the MCS can help the STA MLD#A determine a required error vector magnitude (error vector magnitude, EVM).

S720: The STA MLD#A wakes up the at least one affiliated station based on the radio frame S.

Specifically, after receiving the radio frame S, the STA MLD#A may wake up the at least one affiliated station of the STA MLD#A based on the radio frame S.

For example, if one STA MLD receives the radio frame S, the STA MLD wakes up at least one affiliated station of the STA MLD based on the radio frame S (this may be understood as a unicast scenario). If a plurality of STA MLDs that belong to a same STA MLD group receive the radio frame S, the plurality of STA MLDs wake up at least one affiliated station of each STA MLD based on the radio frame S (this may be understood as a multicast scenario). If a plurality of STA MLDs that do not belong to a same STA MLD group receive the radio frame S, the plurality of STA MLDs wake up at least one affiliated station of each STA MLD based on the radio frame S (this may be understood as a broadcast scenario). Simply speaking, the STA MLD#A wakes up the at least one affiliated station of the STAMLD#Abased on the radio frame S sent by the AP MLD#A. Further descriptions are made below.

In a possible implementation, the method 700 may further include:
S730: The AP MLD#A performs the downlink data transmission or the communication parameter update with the at least one affiliated station.

Specifically, after the STA MLD#A wakes up the at least one affiliated station of the STAMLD#A, the AP MLD#A may perform the downlink data transmission or the communication parameter update with the at least one affiliated station woken up in the STA MLD#A.

In this embodiment of this application, all affiliated stations of the STA MLD#A are in a doze state before the radio frame S is received. The AP MLD#A needs to wake up the at least one affiliated station of the STA MLD#A by using the radio frame S. A number of affiliated stations that are woken up by the STA MLD#A based on the radio frame S may be less than or equal to a number of affiliated stations that the AP MLD#A expects to wake up. For example, the AP MLD#A intends to wake up five affiliated stations of the STA MLD#A by using the radio frame S, and the STA MLD#A may wake up only some or all of the five affiliated stations in an actual process.

In a possible implementation, the radio frame S includes ID information of the at least one affiliated station of the STA MLD#A. The ID information indicates, to the STA MLD#A, which affiliated stations need to be woken up by the STA MLD#A. The ID information may include a traffic identifier (traffic identifier, TID) or a link ID. Specifically, a mapping relationship exists between the TID and the link identifier, that is, the TID indicates the link ID. For example, a TID 1 is mapped to a link 1 and a TID 2 is mapped to a link 2. Therefore, the STA MLD#A determines the link ID by using the TID, to determine an affiliated station corresponding to a link identified by the link ID.

As described above, at least one link exists between the STA MLD#A and the AP MLD#A. Each link is associated with one STA of the STA MLD#A and one AP of the AP MLD#A. Therefore, a link ID of each link may be associated with one STA and one AP. The link ID or the TID is carried in the radio frame S, so that the STA MLD#A can determine, based on the link ID or the TID, which affiliated stations need to be woken up.

In a possible implementation, the ID information may further include device ID information of the affiliated station. In this way, the STA MLD#A may determine, based on the device ID information of the affiliated station, an affiliated station that needs to be woken up.

In a possible implementation, the at least one affiliated station may be predefined in a protocol. Specifically, the AP MLD#A needs to send the radio frame S only to the STA MLD#A, where the radio frame S does not need to carry the foregoing ID information, and the STA MLD#A may determine the affiliated station that needs to be woken up.

Based on the foregoing solution, this application supports waking up the at least one affiliated station of the station multi-link device in a multi-link communication scenario.

The foregoing radio frame S is further described below with reference to the accompanying drawings. Specifically, the following further describes the radio frame S in the three scenarios (namely, the unicast scenario, the multicast scenario, and the broadcast scenario).

### Scenario #1: the unicast scenario.

Specifically, when the unicast scenario is used, the radio frame S includes ID information of the STA MLD#A. Details are described below.

FIG. 8 is a diagram of a format 800 of a radio frame S according to an embodiment of this application. As shown in FIG. 8, the radio frame S includes: a media access control (media access control, MAC) frame header (32 bits) (a field), a frame body (a frame body) (a variable bit length) (a field), and a frame check sequence (a frame check sequence, FCS) (16 bits) (a field). The MAC frame header (the field) includes: frame control (frame control) (eight bits) (a subfield), an ID (12 bits) (a subfield), and a type dependent control (type dependent control) (12 bits) (a subfield). In addition, the frame control (the subfield) includes: a type (three bits) (a subfield), protected (one bit) (a subfield), a frame body present (frame body present) (one bit) (a subfield), and a length (length) (three bits) (a subfield).

In FIG. 8, a first value of the type (the subfield) indicates that the radio frame S is a first-type radio frame. The first-type radio frame is different from a radio frame of an existing standard. The first value of the type (the subfield) may be any value in 5 to 7. This is not limited in this application. In other words, the first value of the type (the subfield) indicates that the radio frame S is a radio frame used to wake up the at least one affiliated station of the STA MLD#A. In addition, the protected (the subfield) indicates whether information carried by the radio frame S is processed by using a message integrity check (message integrity check, MIC) algorithm. For the protected (the subfield), the protected (the subfield) is set to 1, indicating that the information carried by the radio frame S is processed by using the MIC algorithm; or the protected (the field) is set to 0, indicating that the radio frame S includes a 16-bit cyclic redundancy check (cyclic redundancy check, CRC). For the frame body present (the subfield), the frame body present (the subfield) is set to 1, indicating that the radio frame S includes the frame body (the field); or the frame body present (the subfield) is set to 0, indicating that the radio frame S does not include the frame body (the field). The length (the subfield) indicates a bit length of the frame body (the field).

In FIG. 8, the ID (the subfield) includes any one of an ID of the STA MLD#A, an ID of a STA MLD group, or an ID of the AP MLD#A. In the unicast scenario, the ID (the subfield) includes the ID of the STA MLD#A. In the multicast scenario, the ID (the subfield) includes the ID of the STA MLD group. In the broadcast scenario, the ID (the subfield) includes the ID of the AP MLD#A. Herein, this application is described by using an example in which the ID (the subfield) includes the ID of the STA MLD#A.

In FIG. 8, the type dependent control (the subfield) includes a sequence number (a subfield) and a counter (a subfield). If the protected (the subfield) in the frame control (the subfield) is 1 and a common packet number (packet number, PN) (a subfield) in a recently sent enhanced WUR operation element is equal to 1, the sequence number (the subfield) includes a timing synchronization function (timing synchronization function, TSF) timer [9:16]. If the protected (the subfield) in the frame control (the subfield) is 1 and a common PN (a subfield) in a recently sent enhanced WUR operation element is equal to 0, in this case, the sequence number (the subfield) includes a PN0; or in other cases, the sequence number (the subfield) may be reserved. If the ID (the subfield) includes the identifier of the STA MLD#A, the protected (the subfield) in the frame control (the subfield) is 1, and a common PN (a subfield) in a recently sent enhanced WUR operation element is equal to 0, the counter (the subfield) includes a PN1 [0:3]; or in other cases, the counter (the subfield) may be reserved.

In FIG. 8, the protected (the subfield) is set to 0, and the FCS (the field) includes the CRC. The protected (the subfield) is set to 1, and the FCS (the field) includes the MIC. In addition, as described above, the radio frame S may include the ID information of the at least one affiliated station, and the ID information may be carried in the frame body (the field).

In FIG. 8, because a bit length of the frame body (the field) is variable, this application supports setting an ID bitmap (a subfield) in the frame body (the field). The ID bitmap (the subfield) indicates the at least one affiliated station of the STA MLD#A. For ease of description, in this application, an example in which the ID bitmap is a TID bitmap is used for description. However, the ID bitmap may alternatively be a link ID bitmap, and a frame format design of the ID bitmap is relatively consistent with a frame format design of the link ID bitmap. Therefore, only a scenario of the TID bitmap is described in this embodiment of this application. However, description of the TID bitmap may alternatively be applicable to description of the link ID bitmap.

Specifically, when the ID (the subfield) includes the identifier of the STA MLD#A, the frame body (the field) includes the TID bitmap (the subfield). The TID bitmap indicates a TID of one or more unicast address bufferable units (bufferable unit, BU) buffered in the AP MLD#A. For example, a value at a bit location k in the TID bitmap is 1, indicating that one or more unicast address BUs with a TID k are buffered in the AP MLD#A. A value at a bit location k in the TID bitmap is 0, indicating that one or more unicast address BUs with a TID k are not buffered in the AP MLD#A. In other words, the AP MLD#A may indicate, by using the TID bitmap in the radio frame S, the at least one affiliated station that the STA MLD#A needs to wake up.

It should be understood that some subfields and fields in the radio frame S shown in FIG. 8 are merely used as examples for description. Some subfields and fields may be reserved, may be improved, or may be removed. This is not limited in this application.

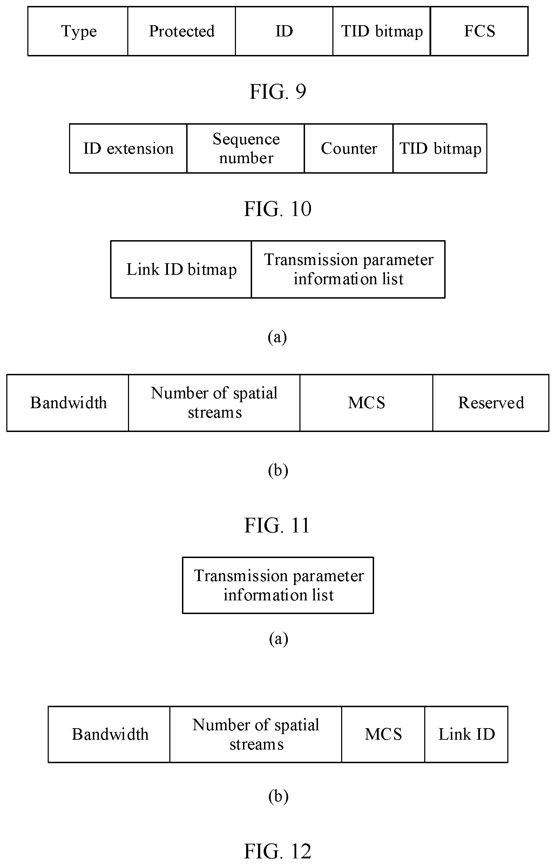

FIG. 9 is a diagram of a format 900 of a radio frame S according to an embodiment of this application. As shown in FIG. 9, the radio frame S includes a type (three bits) (a field), protected (one bit) (a field), an ID (a field), a TID bitmap (12 bits) (a field), and an FCS (16 bits) (a field). A second value of the type (the field) indicates that the radio frame S is a second-type radio frame. The second-type radio frame is different from a radio frame of an existing standard and a first-type radio frame. The second value of the type (the field) may be any value in 5 to 7. This is not limited in this application. For descriptions of the protected (the field), the TID bitmap (the field), and the FCS (the field), refer to FIG. 8. Details are not described herein again.

It should be understood that some subfields and fields in the radio frame S shown in FIG. 9 are merely used as examples for description. Some subfields and fields may be reserved, may be improved, or may be removed. This is not limited in this application.

FIG. 10 is a diagram of a format 1000 of a radio frame S according to an embodiment of this application. As shown in FIG. 10, a frame body (a field) of the radio frame S includes: an ID extension (a subfield) (12 bits), a sequence number (a subfield) (eight bits), a counter (a subfield) (four bits), and a TID bitmap (eight bits) (a field). For descriptions of the type (the field), the protected (the field), the TID bitmap (the field), and the FCS (the field), refer to FIG. 8. Details are not described herein again.

Specifically, the radio frame S may include the frame format shown in FIG. 8. However, the frame body (the field) of the radio frame S may use the format shown in FIG. 10. In FIG. 8, the type (the subfield) of the radio frame S is set to 2. In addition, this application supports setting the ID (the subfield) to 12 least significant bits (least significant bit, LSB) in an organizationally unique identifier (organizationally unique identifier, OUI), and setting a type dependent control (a subfield) to 12 most significant bits (most significant bit, MSB) in the OUI.

In addition, when the ID extension (the subfield) in the frame body (the field) includes the ID of the STA MLD#A, a format example of the frame body (the field) is shown in FIG. 10. If the protected (the subfield) is set to 1 and a common PN (a subfield) in a recently sent enhanced WUR operation element is equal to 1, the sequence number (the subfield) includes a TSF timer [9:16]. If the protected (the subfield) is 1 and a common PN (a subfield) in a recently sent enhanced WUR operation element is equal to 0, in this case, the sequence number (the subfield) includes a PN0; or in other cases, the sequence number (the subfield) may be reserved. If the protected (the subfield) is 1, and a common PN (a subfield) in a recently sent enhanced WUR operation element is equal to 0, the counter subfield includes a PN1 [0:3]; or in other cases, the counter (the subfield) may be reserved. For descriptions of the TID bitmap (the subfield), refer to the foregoing. Details are not described herein again.

It should be understood that some subfields and fields shown in FIG. 10 are merely used as examples for description. Some subfields and fields may be reserved, may be improved, or may be removed. This is not limited in this application.

It can be learned from the descriptions in FIG. 8 to FIG. 10 that the ID information carried in the radio frame S may be carried in an ID bitmap field. FIG. 8 to FIG. 10 describe the scenario in which the ID bitmap is the TID bitmap. However, the foregoing descriptions are also applicable to a scenario in which the ID bitmap is the link ID bitmap. For ease of description, the scenario in which the ID bitmap is the link ID bitmap is not described herein in this application.

It can be learned from the foregoing that the radio frame S may further carry a transmission parameter associated with the downlink data transmission. The transmission parameter may alternatively be carried in the frame body (the field) of the radio frame S. For details, see the following.

FIG. 11 is a diagram of a format 1100 of a radio frame S according to an embodiment of this application. As shown in (a) in FIG. 11, a frame body (a field) includes a link ID bitmap (a subfield) (herein, an example in which an ID bitmap is a link ID is used for description) and a transmission parameter information list (a subfield). For descriptions of the link ID bitmap (the subfield), refer to the foregoing descriptions of the TID bitmap (the subfield). Details are not described herein again. The transmission parameter information list (the subfield) includes at least one piece of transmission parameter information (a subfield), each transmission parameter information (a subfield) includes a transmission parameter used to send one or more unicast address BUs on a specific link, and a corresponding bit that is set to 1 exists in the link ID bitmap (the subfield) on a specific link. Each piece of the at least one piece of transmission parameter information (the subfield) is arranged in ascending order of link IDs.

For example, a STA MLD#A has three links (namely, a link 1, a link 2, and a link 3), and the link ID bitmap (the subfield) indicates that one or more unicast address BUs buffered in an AP MLD#A are sent on the link 1 and the link 3. In this case, one piece of transmission parameter information (the subfield) exists on each of the link 1 and the link 3. First transmission parameter information (a subfield) corresponds to the link 1, and second transmission parameter information (a subfield) corresponds to the link 3.

A format of the transmission parameter information (the subfield) is shown in (b) in FIG. 11. As shown in (b) in FIG. 11, the transmission parameter information (the subfield) includes a bandwidth (a subfield), a number of spatial streams (a subfield), and an MCS (a subfield). For example, different values of the bandwidth (the subfield) indicate different bandwidths. For example, a value 0 indicates a bandwidth of 20 MHz, a value 1 indicates a bandwidth of 40 MHz, a value 2 indicates a bandwidth of 80 MHz, a value 3 indicates a bandwidth of 160 MHz, and a value 4 indicates a bandwidth of 320 MHz. The number of spatial streams (the subfield) indicates a number of spatial streams. In addition, for a definition of the MCS (the subfield), refer to a current technology. Details are not described herein again.

FIG. 12 is a diagram of a format 1200 of a radio frame S according to an embodiment of this application. As shown in (a) in FIG. 12, a frame body (a field) includes a transmission parameter information list (a subfield). The transmission parameter information list (the subfield) includes at least one piece of transmission parameter information (a subfield). As shown in (b) in FIG. 12, each piece of transmission parameter information (the subfield) includes a bandwidth (a subfield), a number of spatial streams (a subfield), an MCS (a subfield), and a link ID (a subfield). For descriptions of (b) in FIG. 12, refer to the foregoing descriptions. Details are not described herein again.

It should be understood that designs of two different transmission parameter information lists are respectively described in FIG. 11 and FIG. 12. A specific design format of the transmission parameter information list is not limited in this application.

In a possible implementation, the transmission parameter information (the subfield) may be further compatible with the formats of the radio frame S in FIG. 9 to FIG. 11. For example, the transmission parameter information list (the field) may be located next to the TID bitmap (the subfield) shown in FIG. 9.

### Scenario #2: the multicast scenario.

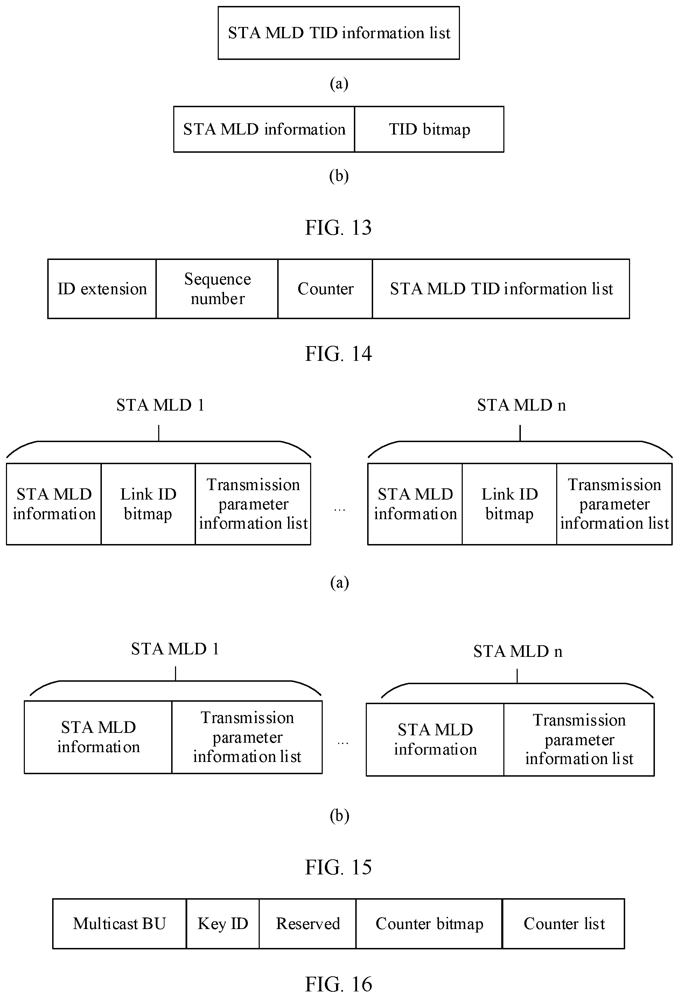

Specifically, in the multicast scenario, a frame format of the radio frame S is shown in FIG. 8. However, a difference between the two is that: An ID (a field) of the radio frame S in the multicast scenario includes an ID of a STA MLD group, and formats of a frame body (a field) of the radio frame S are also different. For details, refer to FIG. 13.

FIG. 13 is a diagram of a format 1300 of a radio frame S according to an embodiment of this application. As shown in (a) in FIG. 13, a frame body (a field) includes: a STA MLD TID information list (a subfield) (24×n bits). The STA MLD TID information list includes at least one piece of STA MLD TID information. For a format of the STA MLD TID information, refer to (b) in FIG. 13. As shown in (b) in FIG. 13, the STA MLD TID (the subfield) information includes: STA MLD information and a TID bitmap. The STA MLD information includes an ID of a STA MLD, and the ID indicates a specific STA MLD in a STA MLD group. In addition, for descriptions of the TID bitmap, refer to the foregoing descriptions. Details are not described herein again. It should be understood that a quantity of STA MLD TID information included in the STA MLD TID information list (the subfield) may be determined based on a bit length of the frame body (the field).

FIG. 14 is a diagram of a format 1400 of a radio frame S according to an embodiment of this application. As shown in FIG. 14, the radio frame S includes an ID extension (a field), a sequence number (a field), a counter (a field), and a STA MLD TID information list (a field). For descriptions of the foregoing fields, refer to FIG. 9 and FIG. 13 separately. Details are not described herein again.

It can be learned from the foregoing that the radio frame S may further carry a transmission parameter associated with downlink data transmission. The transmission parameter may alternatively be carried in a frame body (a field) of the radio frame S. For details, see the following.

FIG. 15 is a diagram of a format 1500 of a radio frame S according to an embodiment of this application. As shown in (a) in FIG. 15, a frame body (a field) includes at least one piece of STA MLD information (a subfield), a link ID bitmap (a subfield), and a transmission parameter information list (a subfield). As shown in (b) in FIG. 15, a frame body (a field) includes at least one piece of STA MLD information (a subfield) and a transmission parameter information list (a subfield). For descriptions of the link ID bitmap (the subfield), refer to the foregoing descriptions of the TID bitmap (the subfield). Details are not described herein again. For descriptions of the transmission parameter information list (the subfield), refer to the foregoing descriptions. Details are not described herein again.

It should be understood that designs of two different transmission parameter information lists (the subfield) are described in FIG. 15. A specific design format of the transmission parameter information list (the subfield) is not limited in this application.

### Scenario #3: the broadcast scenario.

Specifically, in the broadcast scenario, a frame format of the radio frame S is shown in FIG. 8. However, a difference between the two is that: An ID (a field) of the radio frame S in the broadcast scenario includes an ID of an AP MLD#A, and formats of a frame body (a field) of the radio frame S are also different. For details, refer to FIG. 16.

It should be understood that the ID of the AP MLD#A includes 12 LSBs of a compressed MAC address of the AP MLD#A. This is uniformly described herein, and details are not described below again.

FIG. 16 is a diagram of a format 1600 of a radio frame S according to an embodiment of this application. As shown in FIG. 16, a frame body (a field) of the radio frame S includes a multicast BU (a subfield), a key ID (a subfield), reserved (a subfield), a counter bitmap (a subfield), and a counter list (a subfield).

Specifically, this application supports setting the multicast BU (the subfield) to 1, to indicate that one or more multicast frames are buffered in an AP MLD#A corresponding to the ID in the key ID (the subfield). Otherwise, the multicast BU (the subfield) is set to 0. If the protected (the subfield) in the frame control (the subfield) is set to 1, the key ID (the subfield) is set to 0 to indicate that a WIGTK identifier of a wake-up radio integrity group temporal key (wake-up radio integrity group temporal key, WIGTK) for calculating a MIC is 8. If the protected (the subfield) in the frame control (the subfield) is set to 1, the key ID (the subfield) is set to 1 to indicate that a WIGTK identifier for calculating a MIC is 9. Otherwise, the key ID (the subfield) is reserved.

In addition, the counter bitmap (the subfield) indicates that a link corresponding to the counter (the subfield) exists in the counter list (the subfield). For example, a value at a bit location k in the counter bitmap (the subfield) is 1, indicating that a corresponding counter (a subfield) exists in the counter list (the subfield) on a link k. A value at a bit location k in the counter bitmap (the subfield) is 0, indicating that a corresponding counter (a subfield) does not exist in the counter list (the subfield) on a link k. In addition, this application supports setting a bit corresponding to a sending link in the counter bitmap (subfield) to 0. The counter list (the subfield) includes one or more counters (subfields). Each counter (the subfield) includes a current BSS update counter value on a specific link. A corresponding bit that is set to 1 exists in the counter bitmap (the subfield) on the specific link. The one or more counters (the subfields) are arranged in ascending order of link IDs.

For example, if the AP MLD#A has three links (namely, a link 1, a link 2, and a link 3), the link 2 is a sending link, and the counter bitmap (the subfield) indicates that a counter (a subfield) exists in the counter list (the subfield) on the link 1 and the link 3, a first counter (a subfield) in the counter list (the subfield) corresponds to the link 1, a second counter (a subfield) in the counter list (the subfield) corresponds to the link 3, and the counter (the subfield) in the type dependent control (the subfield) corresponds to the link 2.

As described above, in a possible implementation, the radio frame S includes communication parameter update information, and the communication parameter update information is used to assist a STA MLD#A in determining whether a communication parameter of at least one affiliated station of the STA MLD#A is updated. Specifically, the communication parameter update information includes the counter bitmap (the subfield) and the counter list (the subfield) that are shown in FIG. 16. Further, for example, the STAMLD#A compares, with a value of a locally stored counter, a value of a counter in the counter bitmap (the subfield) and the counter list (the subfield) in the radio frame S received by the STA MLD#A. If the two values are different, it indicates that a communication parameter is updated. Correspondingly, the STA MLD#A wakes up an affiliated station whose communication parameter is updated. The value of the locally stored counter may be obtained from a corresponding counter (the subfield) of the radio frame S that is received last time or the enhanced WUR operation element. For specific descriptions herein, refer to an existing standard. Details are not described in this application.

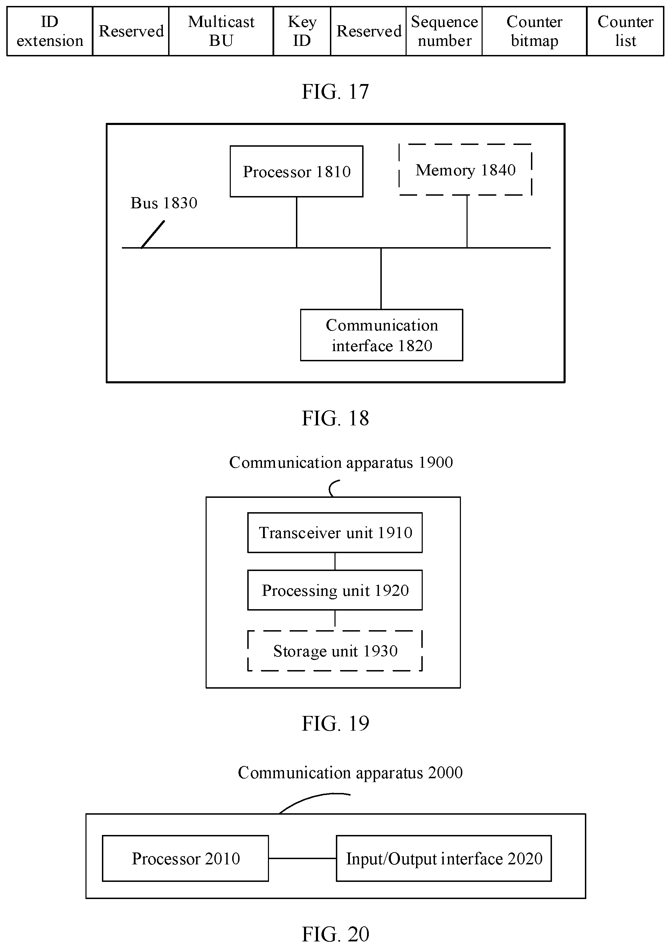

FIG. 17 is a diagram of a format 1700 of a radio frame S according to an embodiment of this application. As shown in FIG. 17, a frame body (a field) of the radio frame S includes: an ID extension (a subfield), reserved (a subfield), a multicast BU (a subfield), a key ID (a subfield), reserved (a subfield), a sequence number (a subfield), a counter bitmap (a subfield), and a counter list (a subfield). The ID extension (the subfield) includes an ID of an AP MLD#A.

Specifically, this application supports setting the multicast BU (the subfield) to 1 to indicate that one or more multicast frames are buffered in the AP MLD#A corresponding to the ID in the ID extension (the subfield). Otherwise, the multicast BU (the subfield) is set to 0. For descriptions of the remaining subfields, refer to descriptions in FIG. 16. Details are not described herein again.

It should be understood that the foregoing descriptions of the formats of the radio frame S in FIG. 8 to FIG. 17 are merely used as an example, and are not used as a final limitation. A frame format of the radio frame S that is obtained by extending or expanding the format of the radio frame S in FIG. 8 to FIG. 17 shall also fall within the protection scope claimed in this application.

The foregoing describes the method embodiments in embodiments of this application, and the following describes corresponding apparatus embodiments.

To implement functions in the methods provided in the foregoing embodiments of this application, the terminal and the network device each may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 18 is a block diagram of a communication apparatus 1800 according to an embodiment of this application. The communication apparatus 1800 includes a processor 1810 and a communication interface 1820. The processor 1810 and the communication interface 1820 are connected to each other through a bus 1830. The communication apparatus 1800 shown in FIG. 18 may be a STA MLD#A or an AP MLD#A.

Optionally, the communication apparatus 1800 further includes a memory 1840.

The memory 1840 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1840 is used for related instructions and data.

The processor 1810 may be one or more central processing units (central processing unit, CPU). When the processor 1810 is one CPU, the CPU may be a single-core CPU or a multicore CPU.

When the communication apparatus 1800 is the STA MLD#A, the processor 1810 is configured to read a computer program or instructions stored in the memory 1840, to perform the following operations, for example: receiving a radio frame S from the AP MLD#A, where the radio frame S is used to wake up at least one affiliated station of the STA MLD#A; and waking up the at least one affiliated station of the STA MLD#A based on the radio frame S.

The foregoing content is merely used as an example for description. When the communication apparatus 1800 is the STA MLD#A, the communication apparatus 1800 is responsible for performing the methods or steps related to the STA MLD#A in the foregoing method embodiments.

When the communication apparatus 1800 is the AP MLD#A, the processor 1810 is configured to read the computer program or the instructions stored in the memory 1840, to perform the following operations, for example: sending a radio frame S to the STA MLD#A, where the radio frame S is used to wake up at least one affiliated station of the STA MLD#A; and performing downlink data transmission or a communication parameter update with at least one woken-up affiliated station.

The foregoing content is merely used as an example for description. When the communication apparatus 1800 is the AP MLD#A, the communication apparatus 1800 is responsible for performing the method or steps related to the AP MLD#A in the foregoing method embodiment.

The foregoing description is merely an example description. For specific content, refer to the content shown in the foregoing method embodiments. In addition, for implementation of each operation in FIG. 18, refer to corresponding descriptions of the method embodiment shown in FIG. 7.

FIG. 19 is a block diagram of a communication apparatus 1900 according to an embodiment of this application. The communication apparatus 1900 may be the STA MLD#A or the AP MLD#A in the foregoing embodiments, or may be a chip or a module in the STA MLD#A or the AP MLD#A. The chip or the module is configured to implement the method in the foregoing embodiment. The communication apparatus 1900 includes a transceiver unit 1910 and a processing unit 1920. The following describes the transceiver unit 1910 and the processing unit 1920 by using an example.

The transceiver unit 1910 may include a sending unit and a receiving unit that are respectively configured to implement a sending function or a receiving function in the foregoing method embodiment. The transceiver unit 1910 may further include a processing unit, configured to implement a function other than sending or receiving.

For example, when the communication apparatus 1900 is the STA MLD#A, the transceiver unit 1910 is configured to receive a radio frame S from the AP MLD#A, where the radio frame S is used to wake up at least one affiliated station of the STA MLD#A. The processing unit 1920 wakes up the at least one affiliated station of the STA MLD#A based on the radio frame S.

Optionally, the communication apparatus 1900 further includes a storage unit 1930, configured to store a program or code used to perform the foregoing method.

The foregoing content is merely used as an example for description. When the communication apparatus 1900 is the STA MLD#A, the communication apparatus 1900 is responsible for performing the method or steps related to the STAMLD#Ain the foregoing method embodiment.

For example, when the communication apparatus 1900 is the AP MLD#A, the transceiver unit 1910 is configured to send the radio frame S to the STA MLD#A, where the radio frame S is used to wake up the at least one affiliated station of the STA MLD#A. The processing unit 1920 is configured to perform downlink data transmission or a communication parameter update with at least one woken-up affiliated station.

Optionally, the communication apparatus 1900 further includes a storage unit 1930, configured to store a program or code used to perform the foregoing method.

The foregoing content is merely used as an example for description. When the communication apparatus 1900 is the AP MLD#A, the communication apparatus 1900 is responsible for performing the method or steps related to the AP MLD#A in the foregoing method embodiment.

In addition, for implementation of each operation in FIG. 19, refer to corresponding descriptions of the method shown in the foregoing embodiment. Details are not described herein again.

The apparatus embodiments shown in FIG. 18 and FIG. 19 are used to implement the content described in FIG. 7 in the foregoing method embodiment. Therefore, for specific execution steps and methods of the apparatuses shown in FIG. 18 and FIG. 19, refer to the content described in the foregoing method embodiments.

It should be understood that the transceiver unit may include a sending unit and a receiving unit. The sending unit is configured to execute a sending action of the communication apparatus, and the receiving unit is configured to execute a receiving action of the communication apparatus. For ease of description, the sending unit and the receiving unit are combined into one transceiver unit in this embodiment of this application. This is uniformly described herein, and details are not described below again.

FIG. 20 is a diagram of a communication apparatus 2000 according to an embodiment of this application. The communication apparatus 2000 may be configured to implement a function of the STA MLD#A or the AP MLD#A in the foregoing method. The communication apparatus 2000 may be a chip in the STA MLD#A or the AP MLD#A.

The communication apparatus 2000 includes an input/output interface 2020 and a processor 2010. The input/output interface 2020 may be an input/output circuit. The processor 2010 may be a signal processor, a chip, or another integrated circuit that may implement the method in this application. The input/output interface 2020 is configured to: input or output a signal or data.

For example, when the communication apparatus 2000 is the STA MLD#A, the input/output interface 2020 is configured to receive a radio frame S from the AP MLD#A, where the radio frame S is used to wake up at least one affiliated station of the STA MLD#A. The processor 2010 is configured to wake up the at least one affiliated station of the STA MLD#A based on the radio frame S.

For example, when the communication apparatus 2000 is the AP MLD#A, the input/output interface 2020 is configured to send a radio frame S to the STA MLD#A, where the radio frame S is used to wake up at least one affiliated station of the STA MLD#A. The processor 2010 is configured to perform downlink data transmission or a communication parameter update with at least one woken-up affiliated station.

In a possible implementation, the processor 2010 executes the instructions stored in the memory, to implement the function implemented by the AP MLD#A.

Optionally, the communication apparatus 2000 further includes a memory.

Optionally, the processor and the memory are integrated together.

Optionally, the memory is located outside the communication apparatus 2000.

In a possible implementation, the processor 2010 may be a logic circuit, and the processor 2010 inputs/outputs a message or signaling through the input/output interface 2020. The logic circuit may be a signal processor, a chip, or another integrated circuit that can implement the method in embodiments of this application.

The foregoing descriptions of the apparatus in FIG. 20 are merely an example for description. The apparatus can be configured to perform the method in the foregoing embodiment. For specific content, refer to descriptions of the foregoing method embodiment. Details are not described herein again.

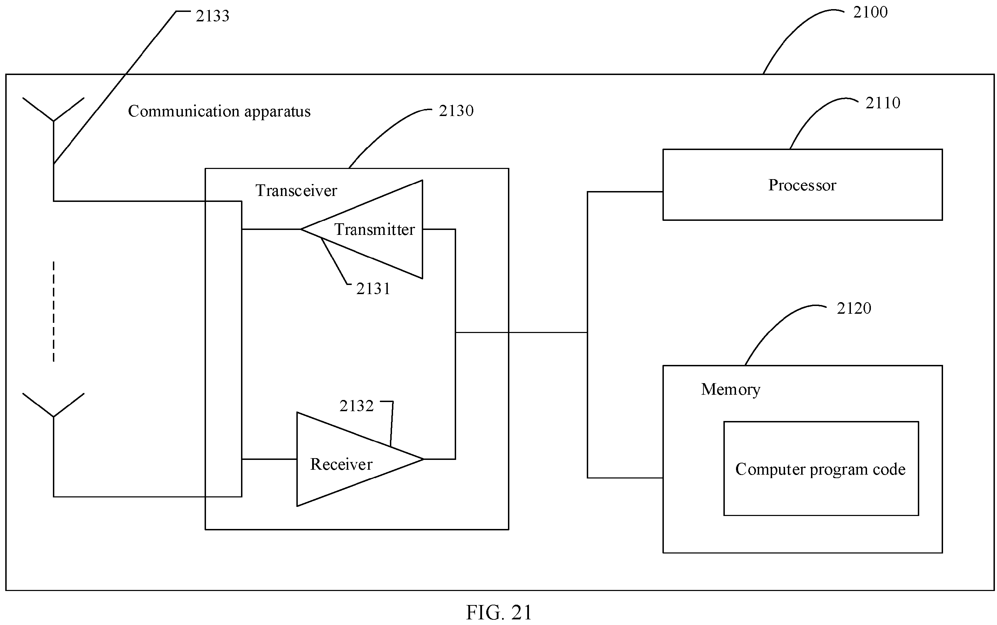

When the communication apparatus 2100 is the AP MLD#A (the AP MLD#A is a network device), for example, a base station, FIG. 21 is a diagram of a simplified structure of a base station. The base station includes a part 2110, a part 2120, and a part 2130. The part 2110 is mainly configured to: perform baseband processing, control the base station, and the like. The part 2110 is usually a control center of the base station, may be usually referred to as a processor, and is configured to control the base station to perform a processing operation on a network device side in the foregoing method embodiments. The part 2120 is mainly configured to store computer program code and data. The part 2130 is mainly configured to: receive and send a radio frequency signal, and perform conversion between the radio frequency signal and a baseband signal. The part 2130 may be usually referred to as a transceiver module, a transceiver machine, a transceiver circuit, a transceiver, or the like. The transceiver module in the part 2130 may alternatively be referred to as a transceiver machine, or a transceiver, or the like, and includes an antenna 2133 and a radio frequency circuit (not shown in the figure). The radio frequency circuit is mainly configured to perform radio frequency processing. Optionally, a device configured to implement a receiving function in the part 2130 may be considered as a receiver, and a device configured to implement a sending function may be considered as a transmitter. In other words, the part 2130 includes the receiver 2132 and the transmitter 2131. The receiver may alternatively be referred to as a receiving module, a receiver device, a receiver circuit, or the like, and the transmitter may be referred to as a transmit module, a transmitter device, a transmitter circuit, or the like.

The part 2110 and the part 2120 may include one or more boards, and each board may include one or more processors and one or more memories. The processor is configured to: read and execute a program in the memory, to implement a baseband processing function and control the base station. If there are a plurality of boards, the boards may be interconnected to each other to enhance a processing capability. In an optional implementation, a plurality of boards may share one or more processors, or a plurality of boards share one or more memories, or a plurality of boards share one or more processors at the same time.

For example, in an implementation, the transceiver module in the part 2130 is configured to execute a transceiving-related process executed by a network device in the embodiment shown in FIG. 7. The processor in the part 2110 is configured to execute a processing-related process executed by the network device in the embodiment shown in FIG. 7.

In another implementation, the processor in the part 2110 is configured to execute a processing-related process executed by a communication device in the embodiment shown in FIG. 7.

In another implementation, the transceiver module in the part 2130 is configured to execute a transceiving-related process executed by the communication device in the embodiment shown in FIG. 7.

It should be understood that FIG. 21 is merely an example rather than a limitation, and the foregoing network device including the processor, the memory, and the transceiver may not depend on the structures shown in FIG. 18 to FIG. 20.

When the communication apparatus 2100 is a chip, the chip includes a transceiver, a memory, and a processor. The transceiver may be an input/output circuit or a communication interface. The processor is a processor, a microprocessor, or an integrated circuit integrated on the chip. The sending operation of the network device in the foregoing method embodiment may be understood as an output of the chip, and the receiving operation of the network device in the foregoing method embodiment may be understood as an input of the chip.

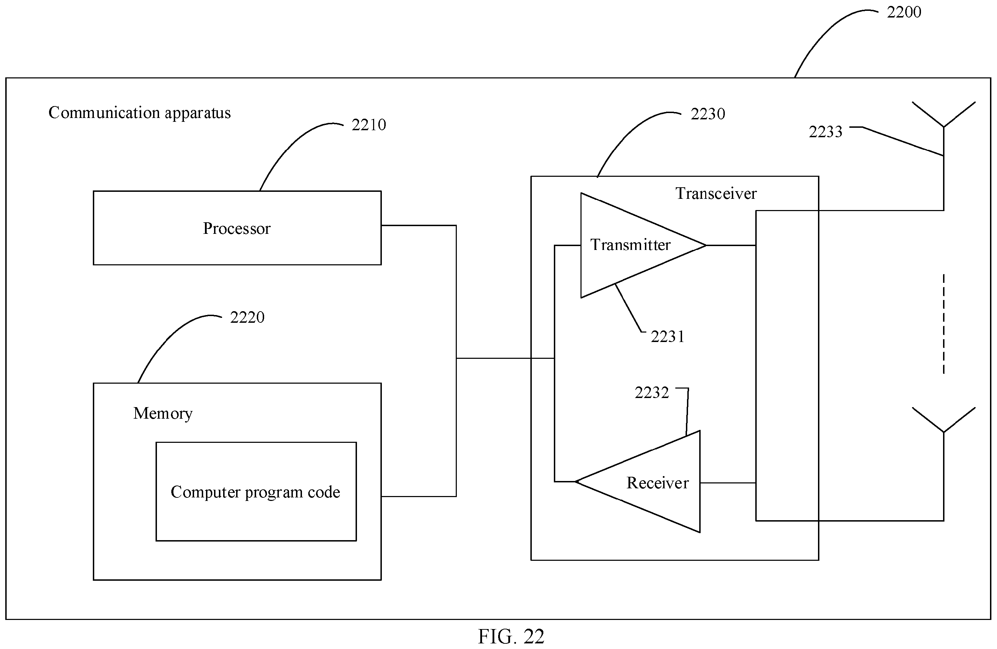

FIG. 22 is a block diagram of a communication apparatus 2200 according to an embodiment of this application. The communication apparatus 2200 may be a STA MLD#A, a processor of the STA MLD#A, or a chip. The communication apparatus 2200 may be configured to perform the operations performed by the STA MLD#A in the foregoing method embodiment.

When the communication apparatus 2200 is the STA MLD#A (the STA MLD#A is a terminal device), FIG. 22 is a diagram of a simplified structure of a terminal device. As shown in FIG. 22, the terminal device includes a processor, a memory, and a transceiver. The memory may store computer program code. The transceiver includes a transmitter 2231, a receiver 2232, a radio frequency circuit (not shown in the figure), an antenna 2233, and an input/output apparatus (not shown in the figure).

The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to: receive and send a radio frequency signal in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When the data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 22 shows only one memory, one processor, and one transceiver. In an actual terminal device product, there may be one or more processors and one or more memories. The memory may alternatively be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 22, the terminal device includes a processor 2210, a memory 2220, and a transceiver 2230. The processor 2210 may alternatively be referred to as a processing unit, a processing board, a processing module, a processing apparatus, or the like. The transceiver 2230 may alternatively be referred to as a transceiver unit, a transceiver machine, a transceiver apparatus, or the like.

Optionally, a device for implementing a receiving function in the transceiver 2230 may be considered as a receiving module, and a device for implementing a sending function in the transceiver 2230 may be considered as a sending module. That is, the transceiver 2230 includes the receiver device and the transmitter device. The transceiver may alternatively be sometimes referred to as a transceiver machine, a transceiver module, a transceiver circuit, or the like. The receiver device may alternatively be sometimes referred to as a receiver, a receiving module, a receiver circuit, or the like. The transmitter device may alternatively be sometimes referred to as a transmitter, a transmitting module, a transmitter circuit, or the like.

For example, in an implementation, the processor 2210 is configured to execute a processing action of the STA MLD#A in the embodiment shown in FIG. 7, and the transceiver 2230 is configured to execute a receiving and sending action on a STA MLD#A side in FIG. 7.

For example, in an implementation, the processor 2210 is configured to execute a processing action on the STAMLD#A side in the embodiment shown in FIG. 7, and the transceiver 2230 is configured to execute a receiving and sending action on the STA MLD#A side in FIG. 7.

It should be understood that FIG. 22 is merely an example rather than a limitation. The foregoing terminal device including the transceiver module and the processing module may not depend on the structures shown in FIG. 18 to FIG. 20.

When the communication apparatus 2200 is a chip, the chip includes a processor, a memory, and a transceiver. The transceiver may be an input/output circuit or a communication interface. The processor may be a processing module, a microprocessor, or an integrated circuit integrated on the chip. The sending operation of the terminal device in the foregoing method embodiment may be understood as an output of the chip, and the receiving operation of the terminal device in the foregoing method embodiment may be understood as an input of the chip.

This application further provides a chip, including a processor, configured to: invoke, from a memory, instructions stored in the memory and run the instructions, to enable a communication device in which the chip is installed to perform the methods in the foregoing examples.

This application further provides another chip, including an input interface, an output interface, and a processor. The input interface, the output interface, and the processor are connected through an internal connection path, the processor is configured to execute code in a memory, and when the code is executed, the processor is configured to perform the methods in the foregoing examples. Optionally, the chip further includes a memory, and the memory is configured to store a computer program or code.

This application further provides a processor, configured to be coupled to a memory, and configured to perform the method and the functions of the network device or the terminal device in any one of the foregoing embodiments.

Another embodiment of this application provides a computer program product including instructions. When the computer program product is run on a computer, the method in the foregoing embodiment is implemented.

This application further provides a computer program. When the computer program is run on a computer, the method in the foregoing embodiment is implemented.

Another embodiment of this application provides a computer-readable storage medium. The computer-readable storage medium stores a computer program. When the computer program is executed by a computer, the method in the foregoing embodiment is implemented.

In the descriptions of embodiments of this application, unless otherwise specified, "a plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, words such as "example" or "for example" are used to represent an example or a description.

Any embodiment or design scheme described as an "example" or "for example" in embodiments of this application shall not be construed as being more preferred or more advantageous than another embodiment or design scheme. Exactly, use of the terms such as "example" or "for example" is intended to present a related concept in a specific manner for ease of understanding.

In the descriptions of embodiments of this application, "/" represents an "or" relationship between associated objects unless otherwise specified. For example, A/B may represent A or B. In this application, "and/or" describes only an association relationship between associated objects, and represents that three relationships may exist. For example, A and/or B may represent the following three cases: A exists alone, both A and B exist, and B exists alone, where A and B may be singular or plural.

It should be understood that "one embodiment" or "an embodiment" mentioned throughout this specification means that particular features, structures, or characteristics related to this embodiment are included in at least one embodiment of this application.

Therefore, "in one embodiment" or "in an embodiment" appearing throughout the specification does not necessarily refer to a same embodiment. In addition, these particular features, structures, or characteristics may be combined in one or more embodiments by using any appropriate manner.

Sequence numbers of the foregoing processes do not mean execution sequences in various embodiments of this application. The execution sequences of the processes should be determined based on functions and internal logic of the processes, and should not be construed as any limitation on the implementation processes in embodiments of this application.

It may be understood that an "embodiment" mentioned throughout this specification means that particular features, structures, or characteristics related to this embodiment are included in at least one embodiment of this application.

Therefore, embodiments in the entire specification are not necessarily a same embodiment. In addition, these particular features, structures, or characteristics may be combined in one or more embodiments by using any appropriate manner.

It may be understood that sequence numbers of the processes do not mean execution sequences in various embodiments of this application. The execution sequences of the processes should be determined based on functions and internal logic of the processes, and should not be construed as any limitation on implementation processes in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are executed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed.

In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to a current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A multi-link communication method, comprising:
receiving, by a station multi-link device, a radio frame from an access point multi-link device, wherein the radio frame is used to wake up at least one affiliated station of the station multi-link device; and
waking up, by the station multi-link device, the at least one affiliated station based on the radio frame, wherein
all affiliated stations of the station multi-link device are in a doze state before the radio frame is received.

2. The method according to claim 1, wherein
when the access point multi-link device is to perform downlink data transmission, the radio frame is used to wake up the at least one affiliated station; or
when a communication parameter of the at least one affiliated station is updated, the radio frame is used to wake up the at least one affiliated station.

3. The method according to claim 2, wherein the radio frame comprises a transmission parameter associated with the downlink data transmission.

4. The method according to claim 3, wherein the transmission parameter comprises at least one of the following:
a bandwidth, a number of spatial streams, or a modulation and coding scheme.

5. The method according to any one of claims 1 to 4, wherein
the radio frame comprises identification information of the at least one affiliated station, or the at least one affiliated station is predefined in a protocol.

6. The method according to claim 5, wherein the identification information comprises:
a traffic identifier, wherein the traffic identifier indicates a link identifier; or a link identifier.

7. The method according to any one of claims 1 to 6, wherein the radio frame comprises a type field, and a first value of the type field indicates that the radio frame is a first-type radio frame.

8. The method according to any one of claims 1 to 7, wherein the radio frame further comprises an identification field, the identification field indicates an identifier of the station multi-link device, an identifier of the access point multi-link device, or a group identifier of a station multi-link device group, and the station multi-link device group comprises the station multi-link device.

9. The method according to any one of claims 1 to 8, wherein the radio frame further comprises a frame body field; and
the identification field comprises the identifier of the station multi-link device, the frame body field comprises an identification bitmap, and the identification bitmap indicates the identification information.

10. The method according to any one of claims 1 to 8, wherein the radio frame further comprises a frame body field; and
the identification field comprises the group identifier of the station multi-link device group, the frame body field comprises the identifier of the station multi-link device and an identification bitmap, and the identification bitmap indicates the identification information.

11. The method according to claim 9 or 10, wherein
the identification bitmap comprises a traffic identifier bitmap, wherein the traffic identifier bitmap indicates the traffic identifier; or
the identification bitmap comprises a link identifier bitmap, wherein the link identifier bitmap indicates the link identifier.

12. The method according to any one of claims 1 to 11, wherein the radio frame further comprises a frame body field; and
the identification field comprises the identifier of the access point multi-link device, and the frame body field comprises communication parameter update information.

13. The method according to claim 12, wherein the communication parameter update information comprises a counter bitmap and a counter list.

14. The method according to any one of claims 9 to 11, wherein the frame body field further comprises the transmission parameter.

15. The method according to any one of claims 8 to 14, wherein the identifier of the access point multi-link device comprises 12 least significant bits of a compressed media access control address of the access point multi-link device.

16. The method according to any one of claims 1 to 15, wherein the station multi-link device comprises at least two affiliated stations.

17. A multi-link communication method, comprising:
sending, by an access point multi-link device, a radio frame to at least one station multi-link device, wherein the radio frame is used to wake up at least one affiliated station of each of the at least one station multi-link device; and
performing, by the access point multi-link device, downlink data transmission or a communication parameter update with the at least one woken-up affiliated station, wherein
all affiliated stations of each station multi-link device are in a doze state before the radio frame is received.

18. The method according to claim 17, wherein
when the access point multi-link device is to perform the downlink data transmission, the radio frame is used to wake up the at least one affiliated station; or
when a communication parameter of the at least one affiliated station is updated, the radio frame is used to wake up the at least one affiliated station.

19. The method according to claim 18, wherein the radio frame comprises a transmission parameter associated with the downlink data transmission.

20. The method according to claim 19, wherein the transmission parameter comprises at least one of the following:
a bandwidth, a number of spatial streams, and a modulation and coding scheme.

21. The method according to any one of claims 17 to 20, wherein
the radio frame comprises identification information of the at least one affiliated station, or the at least one affiliated station is predefined in a protocol.

22. The method according to claim 21, wherein the identification information comprises:
a traffic identifier, wherein the traffic identifier indicates a link identifier; or a link identifier.

23. The method according to any one of claims 17 to 22, wherein the radio frame comprises a type field, and a first value of the type field indicates that the radio frame is a first-type radio frame.

24. The method according to any one of claims 17 to 23, wherein the radio frame further comprises an identification field, and the identification field indicates an identifier of the station multi-link device.

25. The method according to any one of claims 17 to 23, wherein the radio frame further comprises an identification field, the identification field indicates a group identifier of a station multi-link device group, and the station multi-link device group comprises at least two station multi-link devices.

26. The method according to any one of claims 17 to 23, wherein the radio frame further comprises an identification field, and the identification field indicates an identifier of the access point multi-link device.

27. The method according to any one of claims 17 to 26, wherein the radio frame further comprises a frame body field; and
the identification field comprises the identifier of the station multi-link device, the frame body field comprises an identification bitmap, and the identification bitmap indicates the identification information.

28. The method according to any one of claims 17 to 26, wherein the radio frame further comprises a frame body field; and
the identification field comprises the group identifier of the station multi-link device group, the frame body field comprises identifiers of the at least two station multi-link devices and at least two identification bitmaps, and the identification bitmap indicates the identification information, wherein
the identifiers of the at least two station multi-link devices are in a one-to-one correspondence with the at least two identification bitmaps.

29. The method according to claim 27 or 28, wherein
the identification bitmap comprises a traffic identifier bitmap, wherein the traffic identifier bitmap indicates the traffic identifier; or
the identification bitmap comprises a link identifier bitmap, and the link identifier bitmap indicates the link identifier.

30. The method according to any one of claims 17 to 29, wherein the radio frame further comprises a frame body field; and
the identification field comprises the identifier of the access point multi-link device, and the frame body field comprises communication parameter update information.

31. The method according to claim 30, wherein the communication parameter update information comprises a counter bitmap and a counter list.

32. The method according to any one of claims 17 to 31, wherein the frame body field further comprises the transmission parameter.

33. The method according to any one of claims 18 to 32, wherein the identifier of the access point multi-link device comprises 12 least significant bits of a compressed media access control address of the access point multi-link device.

34. The method according to any one of claims 17 to 33, wherein the access point multi-link device comprises at least two affiliated access points.

35. A communication apparatus, comprising a processor, wherein the processor is configured to enable, by executing a computer program or instructions or by using a logic circuit, the communication apparatus to perform the method according to any one of claims 1 to 34.

36. The communication apparatus according to claim 35, wherein the communication apparatus further comprises a memory, and the memory is configured to store the computer program or the instructions.

37. The communication apparatus according to claim 35 or 36, wherein the communication apparatus further comprises a communication interface, and the communication interface is configured to: input and/or output a signal.

38. A communication apparatus, comprising a logic circuit and an input/output interface, wherein the input/output interface is configured to: input and/or output a signal, and the logic circuit is configured to perform the method according to any one of claims 1 to 34.

39. A computer-readable storage medium, comprising a computer program or instructions, wherein when the computer program or the instructions are run on a computer, the method according to any one of claims 1 to 34 is performed.

40. A computer program product, comprising instructions, wherein when the instructions are run on a computer, the method according to any one of claims 1 to 34 is performed.

41. A computer program, wherein when the computer program is run on a computer, the method according to any one of claims 1 to 34 is performed.
